# EUROPÄISCHE PATENTSCHRIFT

(11) **EP 0 669 510 B1**
(45) Veröffentlichungstag und Bekanntmachung des Hinweises auf die Patenterteilung: **02.12.1998**
(21) Anmeldenummer: 95101452.1
(22) Anmeldetag: 03.02.1995
(51) Int. Cl.: F26B 9/06, F26B 23/00

(54) **Trockner**
Dryer
Séchoir

(30) Priorität: 25.02.1994 DE 4406322; 14.07.1994 DE 4424846
(43) Veröffentlichungstag der Anmeldung: 30.08.1995
(73) Patentinhaber: Motan Holding GmbH, D-78467 Konstanz (DE)
(72) Erfinder: Kramer, Walter, CH-8280 Kreuzlingen (CH); Kühnau, Holger, D-78465 Konstanz (DE)
(74) Vertreter: Jackisch-Kohl, Anna-Katharina

(56) Entgegenhaltungen:
- EP-A- 0 013 514
- DE-A- 3 113 314
- DE-A- 3 526 092
- FR-A- 1 111 404
- FR-A- 2 569 471
- US-A- 4 099 338
- US-A- 4 676 007

## Beschreibung

Die Erfindung betrifft einen Trockner mit mindestens einem Vorratsbehälter für zu trocknendes Gut nach dem Oberbegriff des Anspruches 1 bzw. 4 bzw. 7 bzw. 13.

Ein derartiger Trockner ist zum Beispiel aus der US-A-4 099 338 bekannt.

Im Vorratsbehälter bekannter Trockner wird das Gut gelagert, das in der Regel ein Kunststoffgranulat oder ein als Schüttgut vorliegendes Recyclingmaterial ist. Über die Zuleitung wird trockene Zuluft in den Vorratsbehälter eingebracht, die die Feuchtigkeit vorn Gut aufnimmt. Über die Rückluftleitung wird die mit Feuchtigkeit beladene Abluft (Rückluft) aus dem Vorratsbehälter abgeführt. Bei diesem Trockner wird im offenen Kreislauf gearbeitet, d.h. die trockene Luft wird von außen zugeführt, auf die Trocknungstemperatur erwärmt und an die Umgebung wieder zurückgegeben. Aufgrund dieser Ausbildung tritt ein hoher Energieverbrauch sowie eine hohe Wärmebelastung der Umgebung auf.

Bei anderen bekannten Trocknern wird im offenen, gemischten oder geschlossenen Kreislauf gearbeitet. Die Rückluftleitung ist an die Zuleitung angeschlossen. In der Rückluftleitung sitzt eine Luftmischklappe, mit der die Rückluftleitung vollständig oder teilweise gegenüber der Zuleitung geschlossen werden kann. Arbeitet der Trockner im offenen Kreislauf, d.h. ist die Luftmischklappe geschlossen, dann wird die mit Feuchtigkeit beladene Rückluft wiederum an die Umgebung abgegeben. Ist die Luftmischklappe ganz oder teilweise offen, strömt ein Teil der mit Feuchtigkeit beladenen Rückluft in die Zuleitung und vermischt sich mit der Trockenluft. Dadurch ergibt sich aber ein schlechter Taupunkt, da die Feuchtigkeitsaufnahme dieser Mischluft im Vergleich zur trockenen Zuluft verringert ist.

Beim gattungsgemäßen Trockner (US-A-4 099 338) wird die über die Zuleitung strömende Zuluft in Sonnenkollektoren erwärmt und mit von der Umgebung angesaugter Frischluft in einem Gasbrenner vermischt, in dem die Zuluft erwärmt wird. Nach dem Durchtritt durch den Vorratsbehälter gelangt die Rückluft durch einen Wärmetauscher, in dem die erwärmte Rückluft die zugeführte Frischluft vor ihrem Zutritt zum Gasbrenner erwärmt. Da die Rückluftleitung senkrecht durch den Wärmetauscher sowie senkrecht zur Zuleitung für die Frischluft verläuft, ist der Wärmeübergang nur verhältnismäßig gering. Das zu trocknende Gut befindet sich auf einem Förderer, der sich während des Durchtrittes der Zuluft quer zur Strömungsrichtung bewegt. Der Vorratsbehälter ist mit entsprechenden Durchgangsöffnungen für den Förderer versehen. Die Zuluft tritt mit Abstand unterhalb des zu trocknenden Gutes aus der Heizeinrichtung in den Vorratsbehälter ein. Dadurch strömt die Zuluft von unten gegen den Förderer und durch das Gut. Dadurch besteht nur eine geringe Kontaktzeit, so daß die Trocknung des Gutes nicht optimal ist.

Bei einem anderen bekannten Trockner (US-A-4 676 007) wird die erwärmte Zuluft über Umfangsleitungen und radial angeordnete Leitungen im Bodenbereich des Vorratsbehälters zugeführt. Die Heizeinrichtung und der Wärmetauscher sowie die Rückführleitung liegen außerhalb des Behälters. Infolge der zahlreichen Zuleitungen ist der Trockner konstruktiv aufwendig und teuer ausgebildet. Da die Rückführleitung über einen Großteil ihrer Länge außerhalb des Vorratsbehälters liegt, geht eine erhebliche Wärmemenge an den Umgebungsraum verloren. Die Zuluft kann darum nicht optimal erwärmt werden, so daß beim Trocknungsprozeß ein hoher Wirkungsgrad nicht erreicht werden kann.

Es ist auch ein Trockner bekannt (DE-A1-35 26 092), bei dem das zu trocknende Gut auf mit Abstand übereinander angeordneten Siebscheiben lagert, die mittig auf Wellen befestigt sind und aus einer Horizontallage in eine Schräglage geschwenkt werden können. Auf jede Siebscheibe wird vom Rand her in Horizontalrichtung Zuluft über verstellbare Schlitzdüsen zugeführt, die das zu trocknende Gut auf einer Kreisscheibe verwirbelt, das dabei stufenweise von oben nach unten befördert wird.

Der Erfindung liegt die Aufgabe zugrunde, den gattungsgemäßen Trockner so auszubilden, daß er nur einen geringen Energieverbrauch hat, die Umgebung des Trockners nur wenig mit Wärme belastet, einen optimalen Taupunkt aufweist und dabei einfach in der konstruktiven Ausbildung und kostengünstig in der Fertigung ist.

Diese Aufgabe wird beim gattungsgemäßen Trockner erfindungsgemäß mit den kennzeichnenden Merkmalen des Anspruches 1 bzw. 4 bzw. 7 bzw. 13 gelöst.

Beim erfindungsgemäßen Trockner nach Anspruch 1 sind die Rückluftleitung und die Zuleitung mit den parallel zueinander liegenden Leitungsabschnitten versehen, die jeweils im Gehäuseraum des Wärmetauschers angeordnet sind. Dadurch strömen die Rückluft und die Zuluft innerhalb des Wärmetauschers über verhältnismäßig lange Strecken, so daß ein optimaler Wärmeaustausch und damit eine optimale Energieausnutzung gewährleistet sind. Da die Zuleitung und die Rückluftleitung im wesentlichen innerhalb des Gehäuseraumes liegen, wird keine Wärme an den Umgebungsraum abgegeben, so daß er auch nicht unnötig erwärmt wird. Die abgegebene Wärme verbleibt vielmehr zunächst innerhalb des Gehäuseraumes des Wärmetauschers, so daß die zuströmende Zuluft vor ihrem Eintritt in den Vorratsbehälter optimal erwärmt werden kann. Der Energieverbrauch wird dadurch gering gehalten und die Rückluft optimal gekühlt. Die erwärmte Zuluft tritt in die Zuführleitung ein, die an den Gehäuseraum des Wärmetauschers nach unten anschließt. Diese Zuführleitung ragt so in den Vorratsbehälter, daß das Austrittsende nach unten gerichtet ist. Darum strömt die Zuluft im Vorratsbehälter zunächst nach unten und erst dann nach oben. Auf diese Weise wird eine besonders intensive Trocknung des Gutes im Vorratsbehälter erreicht. Dabei zeichnet sich der erfindungsgemäße Trockner durch einen konstruktiv einfachen Aufbau aus, wodurch er auch kostengünstig hergestellt werden kann.

Beim erfindungsgemäßen Trockner gemäß Anspruch 4 strömt die Zuluft innerhalb des Gehäuseraumes des Wärmetauschers in die Zuführleitung, die innerhalb des Gehäuseraumes U-förmig ausgebildet ist. Dadurch wird die in der Zuführleitung strömende Zuluft durch den innerhalb des Gehäuseraumes strömenden Anteil der Zuluft noch erwärmt, so daß eine optimale Trocknung der Zuluft vor dem Eintritt in den Vorratsbehälter gewährleistet ist. Da die Zuluft innerhalb des Vorratsbehälters nach unten aus dem Austrittsende der Zuführleitung strömt, wird das im Vorratsbehälter befindliche Gut optimal getrocknet.

Beim Trockner nach Anspruch 7 haben die Zuluft und die Rückluft innerhalb des Gehäuseraumes des Wärmetauschers Strömungsbereiche, in denen sie entgegengesetzt zueinander strömen, um einen optimalen Wärmeübergang zu gewährleisten. Auf diese Weise wird die Zuluft durch die erwärmte Rückluft optimal vorgewärmt. Die Heizeinrichtung benötigt dementsprechend einen geringeren Energiebedarf. Die erwärmte Zuluft tritt noch innerhalb des Gehäuseraumes des Wärmetauschers in die Zuführleitung ein, die im unteren Bereich in den Vorratsbehälter ragt. Im Vorratsbehälter tritt die Zuluft nach unten in das zu trocknende Gut aus, das auf diese Weise hervorragend getrocknet wird. Die Trocknungszeiten können dadurch minimiert werden.

Beim Trockner nach Anspruch 13 wird durch die zwei parallel zueinander liegenden Leitungsabschnitte der Rückluftleitung im Gehäuseraum des Wärmetauschers eine optimale Wärmeübertragung auf die zuströmende Zuluft erreicht. Sie strömt innerhalb des Gehäuseraumes in die Zuführleitung, die ihrerseits innerhalb des Gehäuseraumes U-förmig ausgebildet ist. Die Zuluft tritt wiederum im unteren Bereich in den Vorratsbehälter ein und strömt aus dem Austrittsende nach unten in das zu trocknende Gut.

Die Erfindung wird anhand einiger in den Zeichnungen dargestellter Ausführungsbeispiele näher erläutert. Es zeigen
- Fig. 1: in schematischer Darstellung eine erste Ausführungsform eines erfindungsgemäßen Trockners,
- Fig. 2 bis Fig. 6: in Darstellungen entsprechend Fig. 1 weitere Ausführungsformen von erfindungsgemäßen Trocknern.

Die Trockner dienen dazu, Produkte, wie Kunststoffgranulat oder Recyclingmaterial als Schüttgut, mittels Luft zu trocknen, bevor dieses Produkt der Weiterverarbeitung zugeführt wird.

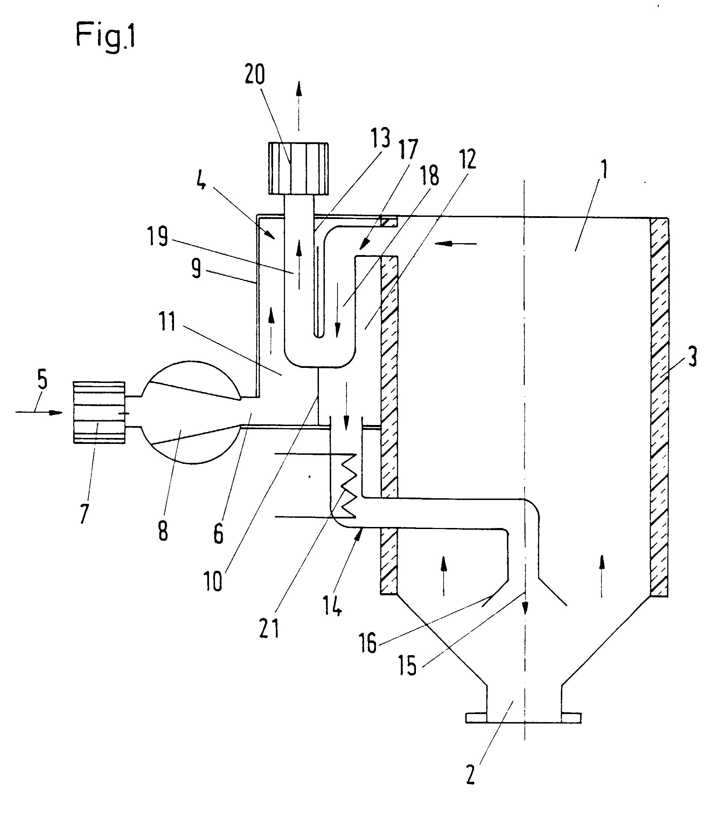

Der Trockner gemäß Fig. 1 hat einen als Trichter ausgebildeten Vorratsbehälter 1, in dem das zu trocknende Gut gelagert wird. Am unteren Ende ist der Trichter 1 konisch verjüngt ausgebildet und mit einer Austrittsöffnung 2 für das getrocknete Gut versehen. In seinem oberhalb des konisch verjüngten Endes liegenden zylindrischen Bereich ist der Trichter 1 mit einem Isoliermantel 3 versehen. An den Trichter 1 ist ein Wärmetauscher 4 angeschlossen, in den Trockenluft 5 eingebracht wird. In der Trockenluftzuleitung 6 befindet sich ein Einlaßfilter 7, dem ein Gebläse 8 nachgeschaltet ist. Im Einlaßfilter 7 werden Schmutzteilchen in der Trockenluft 5 vor dem Eintritt in den Wärmetauscher 4 zurückgehalten.

Der Wärmetauscher 4 hat ein Gehäuse 9, das an den Trichter 1 angeschlossen und durch eine Trennwand 10 in zwei Strömungsräume 11 und 12 aufgeteilt ist. Die Trockenzuluftleitung 6 mündet am unteren Ende in den Strömungsraum 11, in dem die Trockenluft in Pfeilrichtung nach oben strömt. Die Trennwand 10 weist am oberen Ende eine Durchtrittsöffnung 13 auf, durch welche die Trockenluft in den Strömungsraum 12 gelangen kann. In ihm strömt die Trockenluft entgegengesetzt zur Strömungsrichtung im Strömungsraum 11 nach unten in ein Zuführrohr 14, das nach unten aus dem Gehäuse 9 herausführt und durch den Isoliermantel 3 in den Trichter 1 ragt. In der Achse des Trichters 1 ist das Zuführrohr nach unten abgebogen und trichterförmig erweitert. Die Trockenluft strömt in Pfeilrichtung 15 nach unten aus dem trichterförmigen Ende 16 in das zu trocknende Gut. Das trichterförmige Ende 16 des Zuführrohres 14 liegt etwa in Höhe des Überganges vom zylindrischen in den konisch verjüngten Teil des Trichters 1. Die Trockenluft strömt dann in bekannter Weise innerhalb des Trichters 1 in Richtung der eingezeichneten Pfeile nach oben und trocknet hierbei das Gut. Am oberen Ende des nach oben geschlossenen Trichters 1 gelangt die Trockenluft in eine Rückluftleitung 17, die an den Trichter 1 angeschlossen ist und innerhalb des Wärmetauschers siphonartig ausgebildet ist. Die Rückluftleitung 17 hat somit zwei parallel nebeneinander liegende und ineinander übergehende Leitungsabschnitte 18 und 19, von denen der Leitungsabschnitt 18 im Strömungsraum 12 und der Leitungsabschnitt 19 im Strömungsraum 11 des Wärmetauschers 4 liegt. Der Leitungsabschnitt 19 ist nach oben aus dem Gehäuse 9 geführt. Außerhalb des Gehäuses 9 sitzt im Leitungsabschnitt 19 ein Auslaßfilter 20. Die Rückluftleitung 17 durchsetzt abgedichtet die Trennwand 10 des Gehäuses 9.

Im Zuführrohr 14 befindet sich im Bereich zwischen dem Gehäuse 9 und dem Eintritt in den Trichter 1 eine Heizeinrichtung 21.

Zum Trocknen des im Trichter 1 befindlichen Gutes wird die Trockenluft vom Gebläse 8 angesaugt und über die Trockenluftzuleitung 6 in den Strömungsraum 11 gefördert. Dort strömt die Trockenluft nach oben, tritt durch die Durchtrittsöffnung 13 in den Strömungsraum 12 über, in dem die Trockenluft wiederum nach unten in das Zuführrohr 14 strömt. Mit der Heizeinrichtung 21 wird die Trockenluft auf die zum Trockenvorgang erforderliche Temperatur erwärmt, bevor sie in den Trichter 1 eintritt. Die erwärmte Trockenluft strömt durch das trichterförmige Ende 16 des Zuführrohres 14 nach unten aus, durchströmt das zu trocknende Gut und nimmt hierbei die Feuchtigkeit aus dem Gut auf. Die mit Feuchtigkeit beladene Trockenluft strömt dann über die Rückluftleitung 17 aus dem Trichter 1. Über die beiden Leitungsabschnitte 18, 19 und den Auslaßfilter 20 strömt dann die Trockenluft entweder in das Freie oder wird zum Regenieren durch Trockenpatronen und dergleichen geführt.

Die trockene Luft sowie die mit Feuchtigkeit beladene Abluft werden voneinander getrennt geführt, wodurch sich eine optimale Trocknungswirkung und ein optimaler Taupunkt ergeben. Da die Zuführung der Trockenluft vollständig von der Rückluft getrennt ist, wird in den Trichter 1 nur trockene Luft angesaugt, so daß das im Trichter 1 befindliche Gut hervorragend getrocknet wird. Eine Vermischung der trockenen Zuluft mit der feuchten Rückluft findet nicht statt.

Mit dem Isoliermantel 3 des Trichters 1 ergibt sich in Verbindung mit dem Einsatz des Wärmetauschers 4 eine wirksame Energieeinsparung, da die Energie infolge des Wärmetauschprinzips zurückgeführt wird. Die in der Rückluftleitung 17 strömende Rückluft wärmt die über die Trockenluftzuleitung 6 herangeführte trockene Luft auf, so daß entsprechend weniger Heizenergie über die Heizeinrichtung 21 zugeführt werden muß. Der Wärmetauscher 4 zwischen der warmen Rückluft und der kalten, trockenen Ansaugluft ist luftdicht ausgebildet. Aufgrund der Optimierung der internen Energiebilanz wird die Umgebung nur wenig mit Wärme belastet. Schließlich zeichnet sich der Trockner durch eine wirtschaftliche Bauweise aus, weil der Wärmetauscher 4 durch vorhandene Bauteile des Trockners gebildet wird. Für den Wärmetauscher 4 sind keine zusätzlichen Bauteile erforderlich, die die Herstellungskosten des Trockners erhöhen würden.

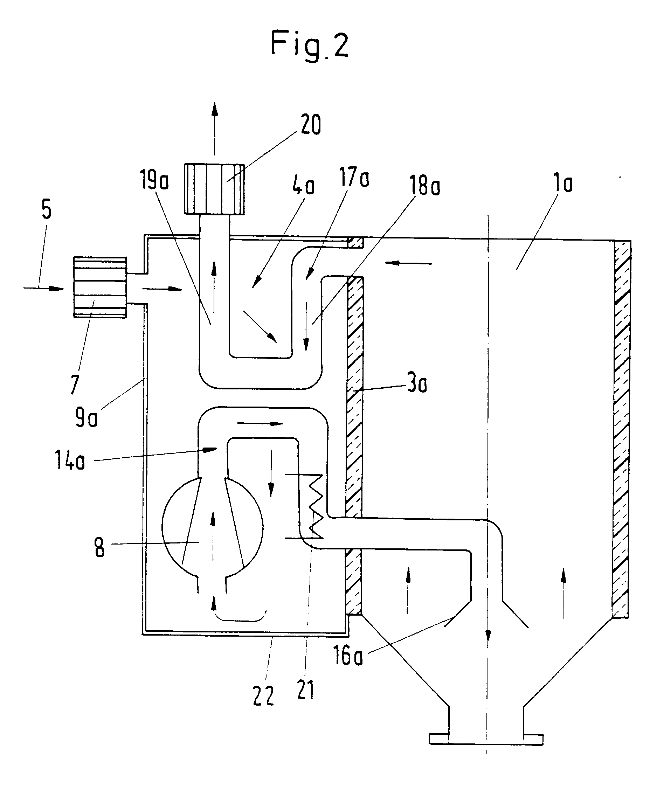

Bei der Ausführungsform gemäß Fig. 2 erfolgt die Ansaugung der trockenen Außenluft durch das Wärmetauschergehäuse 9a. Im Gehäuse 9a ist wie bei der vorigen Ausführungsform die Rückluftleitung 17a mit den beiden Leitungsabschnitten 18a und 19a untergebracht. Das Gehäuse 9a erstreckt sich über die ganze Höhe des zylindrischen Teils des Trichters la und weist im oberen Bereich die Einlaßöffnung für die trockene Zuluft 5 auf, die wie beim vorigen Ausführungsbeispiel vor dem Eintritt in das Gehäuse 9a durch den Einlaßfilter 7 strömt. Die kalte, trockene Zuluft 5 strömt innerhalb des Gehäuses 9a, angesaugt vom Gebläse 8, nach unten. Hierbei strömt die Zuluft an den beiden Leitungsabschnitten 18a, 19a der Rückluftleitung 17a vorbei und nimmt Wärme von der in der Rückluftleitung 17a strömenden warmen Rückluft auf.

Das Gebläse 8 ist am nach unten gerichteten Ende des Zuführrohres 14a vorgesehen, dessen nach unten gerichtetes Eintrittsende nahe dem Boden 22 des Gehäuses 9a liegt. Innerhalb des Gehäuses 9a ist das Zuführrohr 14a U-förmig ausgebildet und liegt im Bereich unterhalb der Rückluftleitung 17a. Im Zuführrohr 14a liegt vor dem Eintritt in den Trichter la die Heizeinrichtung 21, mit der die zuströmende Trockenluft 5 auf die erforderliche Trocknungstemperatur erwärmt wird. Wie beim vorigen Ausführungsbeispiel tritt die erwärmte Trockenluft innerhalb des Trichters la aus dem trichterförmigen Ende 16a des Zuführrohres 14a nach unten in das zu trocknende Gut aus. Innerhalb des Trichters la strömt die Trocknungsluft nach oben und nimmt hierbei die Feuchtigkeit aus dem Gut auf. Am oberen Ende des Trichters la tritt die nunmehr mit Feuchtigkeit beladene Rückluft in die Rückluftleitung 17 ein, in der sie über den Auslaßfilter 20 nach außen strömt.

Der zylindrische Teil des Trichters la ist wiederum mit dem Isoliermantel 3a versehen. Für das Gehäuse 9a ist eine zusätzliche Isolierung nicht erforderlich, da die Gehäusewandung durch die innerhalb des Gehäuses 9a strömende trockene und kalte Zuluft ausreichend gekühlt wird. Die Zuluft nimmt zwar am Wärmetauscher 4a in der beschriebenen Weise Wärme auf, jedoch ist die Temperatur der nach unten zum Einlaßende des Zuführrohres 14a strömenden Trockenluft noch ausreichend niedrig, um die Wände des Gehäuses 9a ausreichend zu kühlen. Damit wird in gleicher Weise wie beim Ausführungsbeispiel nach Fig. 1 eine zusätzliche Isolierung der Gehäusewand vermieden, so daß auch dieser Trockner sehr wirtschaftlich gefertigt werden kann. Auch bei dieser Ausführungsform werden die trockene Zuluft und die mit Feuchtigkeit beladene Rückluft getrennt voneinander geführt, so daß sich eine gute Trocknungswirkung und ein optimaler Taupunkt ergeben. In den Trichter la gelangt wiederum nur trockene Außenluft, da eine Mischung mit der feuchten Rückluft nicht stattfindet. Darüberhinaus weist dieser Trockner die gleichen Vorteile wie der Trockner gemäß Fig. 1 auf.

Mit den Trocknern gemäß den Fig. 1 und 2 wird eine sehr wirksame Energieeinsparung erreicht. Diese Energieeinsparung liegt im üblichen Anwendungsbereich für Trocknungstemperaturen zwischen 80° C und 140° C bei etwa 30 % bis etwa 38 %. Es ist entsprechend weniger Energie zum Betrieb des Trockners notwendig, und es tritt eine nur geringe Wärmebelastung der Geräteumgebung auf. Dies ist insbesondere dann vorteilhaft, wenn beispielsweise in einer Maschinenhalle mehrere Trockner angeordnet sind. Dann ist die Wärmebelastung der Maschinenhalle trotz der entsprechenden Zahl von Trocknern nur gering.

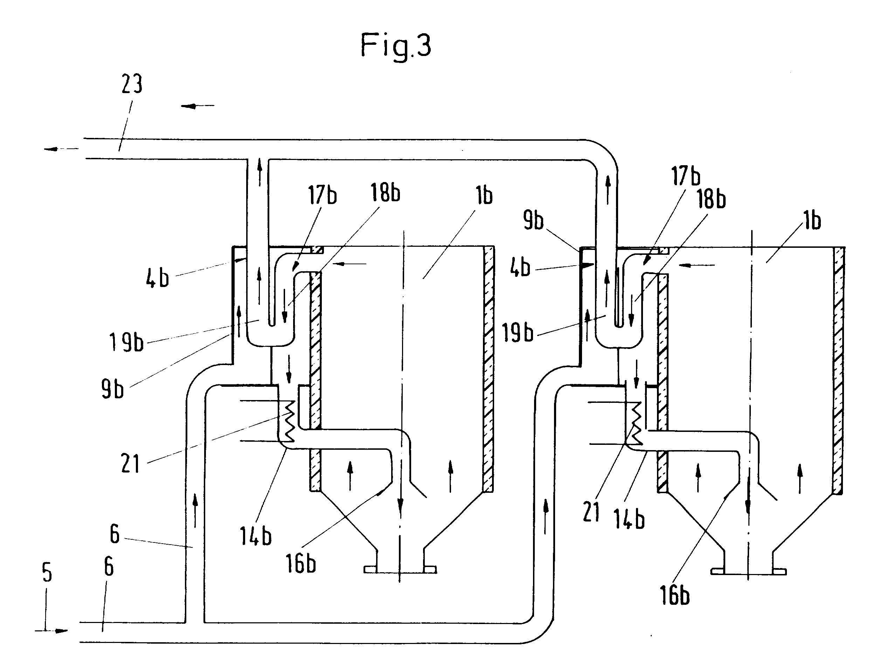

Fig. 3 zeigt eine Ausführungsform, bei der zwei Trockner zusammengeschaltet sind, die im wesentlichen dem Ausführungsbeispiel nach Fig. 1 entsprechen. Die Trockenluft 5. wird durch ein (nicht dargestelltes) Gebläse über die Trockenzuluftleitung 6 den beiden Trichtern 1b zugeführt. Jeder Trichter 1b weist das Wärmetauschergehäuse 9b auf, in dem die beiden Leitungsabschnitte 18b, 19b der Rückluftleitung 17b liegen. An den Boden des Wärmetauschergehäuses 9b schließt, wie beim Ausführungsbeispiel nach Fig. 1, das Zuführrohr 14b an, in dem im Bereich zwischen dem Gehäuse 9b und dem Eintritt in den Trichter 1b die Heizeinrichtung 21 untergebracht ist. Innerhalb des Trichters 1b ist das Zuführrohr 14b in der Achse des Trichters 1b nach unten abgebogen. Aus dem trichterförmig nach unten erweiterten Ende 16b des Zuführrohres 14b tritt die erwärmte Trockenluft nach unten in das Gut ein. Innerhalb des Trichters 1b strömt die Trockenluft nach oben und nimmt in der beschriebenen Weise die Feuchtigkeit aus dem zu trocknenden Gut auf. Am oberen Ende des Trichters 1b strömt die mit Feuchtigkeit beladene Trockenluft in die Rückluftleitung 17b. Beide Rückluftleitungen 17b sind an eine gemeinsame Abluftleitung 23 angeschlossen, innerhalb der die Rückluft in bekannter Weise abgeführt wird. Mittels der Wärmetauscher 4b wird in der beschriebenen Weise die in das Gehäuse 9b eintretende trockene und kalte Zuluft 5 erwärmt, so daß die Heizeinrichtungen 21 eine entsprechend geringere Energie aufbringen müssen, um die Zuluft auf die erforderliche Trocknungstemperatur zu erwärmen. Gleichzeitig wird durch die kalte Zuluft die Wandung des Gehäuses 9b gekühlt, so daß es nicht gesondert isoliert werden muß.

Auf die beschriebene Weise können auch mehr als zwei Trockner 1b zusammengefaßt werden, so daß gleichzeitig mit mehreren Trocknern unterschiedliche Schüttgüter bei individuellen Temperaturen getrocknet werden können. Es ist ferner möglich, die Zuführung der Trocknungsluft zu den einzelnen Trichtern 1b durch Einsatz von Ventilen zu steuern. So kann beispielsweise in der Zuleitung 6 im Bereich zwischen den beiden Trichtern 1b ein Schaltventil vorgesehen sein, mit dem die Zuführung der Trockenluft zum in Fig. 3 rechten Trichter 1b unterbrochen werden kann. In diesem Falle strömt die Trocknungsluft lediglich dem in Fig. 3 linken Trichter 1b zu.

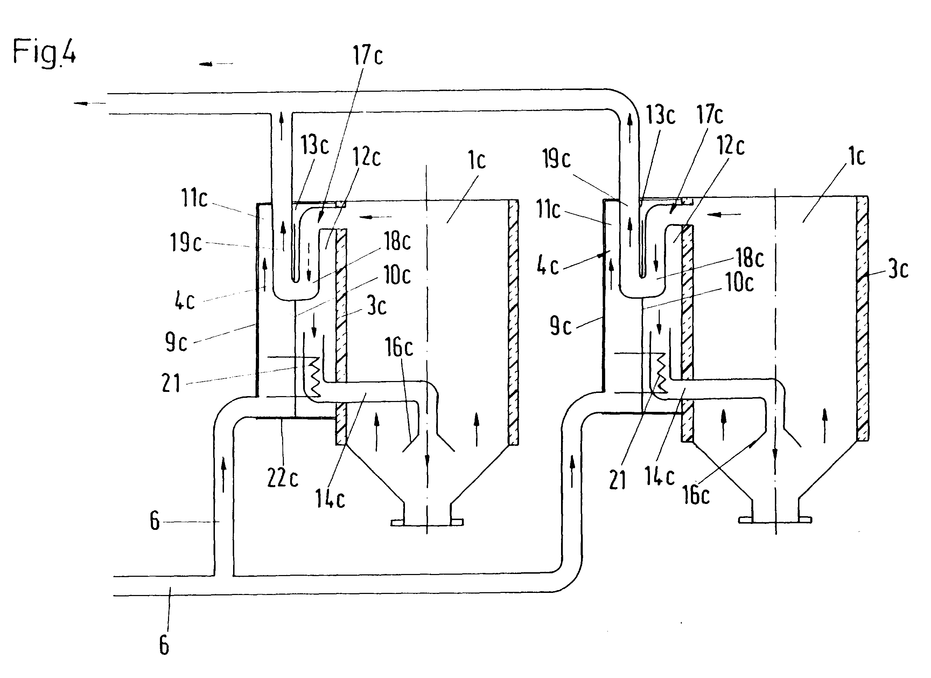

Fig. 4 schließlich zeigt eine Ausführungsform, bei der wiederum zwei Trichter 1c zusammengefaßt sind. Das Gehäuse 9c des Wärmetauschers 4c erstreckt sich annähernd über die gesamte Höhe des zylindrischen Teils des Trichters lc, der wie bei den vorigen Ausführungsbeispielen im zylindrischen Teil den Isoliermantel 3c aufweist. Die Trockenluftzuleitung 6 mündet unmittelbar über dem Boden 22c in die Gehäuse 9c. Sie sind wie bei der Ausführungsform gemäß Fig. 1 durch die Zwischenwand 10c in die beiden Strömungsräume llc und 12c unterteilt. Die über die Trockenzuluftleitung 6 zugeführte Trockenluft tritt von unten in den Strömungsraum 11c ein, in dem sie nach oben strömt. Durch die Durchtrittsöffnung 13c am oberen Ende der Zwischenwand 10c tritt die Trocknungsluft in den Strömungsraum 12c des Gehäuses 9c über. Im Strömungsraum 12c strömt die Trockenluft nach unten und tritt in das Zuführrohr 14c ein, dessen Eintrittsende innerhalb des Strömungsraumes 12c der Gehäuse 9c liegt. Innerhalb des Strömungsraumes 12c der Gehäuse 9c sitzt im Zuführrohr 14c die Heizeinrichtung 21, mit der die Trockenluft auf die erforderliche Trocknungstemperatur erwärmt wird.

Innerhalb des Strömungsraumes 12c verläuft das Zuführrohr 14c senkrecht nach unten und geht, wie bei der Ausführungsform nach Fig. 1, in einen horizontalen Leitungsabschnitt über, mit dem das Zuführrohr 14c in den jeweiligen Trichter lc eintritt. Innerhalb der Trichter lc haben die Zuführrohre 14c den zentral angeordneten und nach unten gerichteten Leitungsabschnitt mit dem trichterförmig erweiterten Ende 16c, aus dem die erwärmte Trocknungsluft nach unten in das Gut austritt. Innerhalb der Trichter lc strömt die Trocknungsluft dann nach oben durch das Gut, nimmt dessen Feuchtigkeit auf und strömt in die jeweilige Rückluftleitung 17c, die am oberen Ende des Trichters angeschlossen ist. Innerhalb des Gehäuses 9c liegen die beiden parallel zueinander Leitungsabschnitte 18c und 19c der Rückluftleitungen 17c, wobei entsprechend dem Ausführungsbeispiel nach Fig. 1 der Leitungsabschnitt 18c im Strömungsraum 12c und der Leitungsabschnitt 19c im Strömungsraum 13c des Gehäuses 9c liegen. Die über die Zuleitung 6 in das Gehäuse 9c einströmende trockene und kalte Zuluft strömt an den beiden Leitungsabschnitten 18c, 19c vorbei und wird hierbei durch die in diesen Leitungsabschnitten strömende erwärmte Rückluft vorgewärmt. Da sich die Leitungsabschnitte 18c, 19c in Strömungsrichtung der trockenen Zuluft innerhalb der Strömungsräume llc, 12c erstrecken, wird ein optimaler Wärmeaustausch an den Wärmetauschern 4c sichergestellt. Dementsprechend muß von der Heizeinrichtung 21 nur noch eine entsprechend geringere Heizenergie aufgebracht werden, um die Zuluft auf die erforderliche Trocknungstemperatur zu erwärmen.

Auch bei dieser Ausführungsform können mehr als zwei Trocknungstrichter lc vorgesehen werden, deren Zuluftleitungen auch getrennt voneinander abschaltbar sein können, so daß wahlweise verschiedene Trichter lc aus dem Trocknungsvorgang herausgenommen werden können.

Für die Ausführungsformen nach den Fig. 3 und 4 treten bei Kombination mehrerer Trichter weitere Vorteile auf. Wird der Trockengutdurchsatz in einem Trichter 1b, lc verringert, erhöht sich die Rücklufttemperatur in der Rückluftleitung 17b, 17c. Dadurch wird im jeweiligen Wärmetauscher 4b, 4c mehr Energie an die Zuluft übertragen. Die erforderliche Heizleistung wird damit auch herabgesetzt. Diese Wirkung wird ohne zusätzliche Elemente erreicht (Selbststeuerung). Bei Koppelung bzw. Parallelschaltung mehrerer Trockner in einem Luftkreislauf können mit den Heizeinrichtungen 21 unterschiedliche Heiztemperaturen eingestellt werden. In diesem Fall wird die Energierückgewinnung bei hoher Heiztemperatur automatisch größer sein. Die Rücklufttemperatur wird dadurch bei jedem Trockner weitgehend gesenkt. Der Energieverlust durch Abstrahlung an der Abluftleitung 23 wird auf diese Weise verringert.

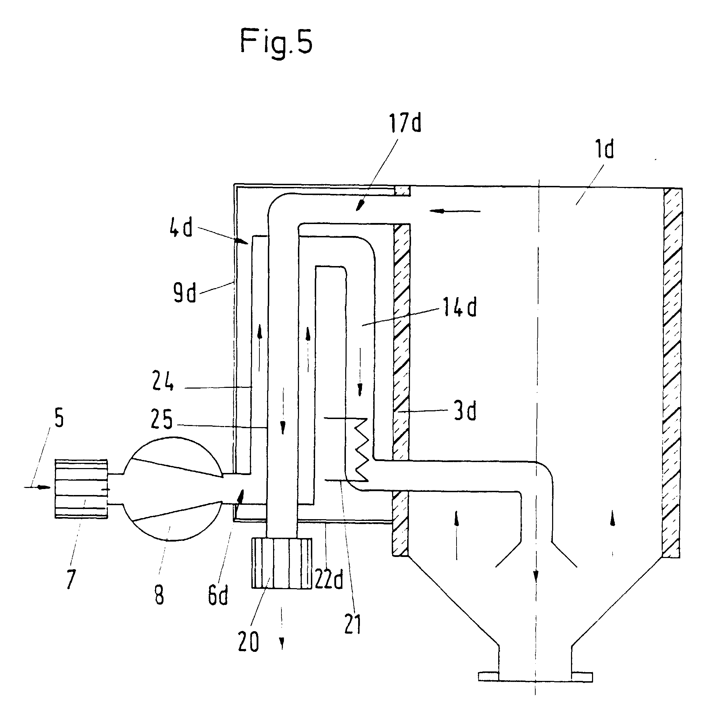

Bei der Ausführungsform gemäß Fig. 5 durchsetzt die Rückluftleitung 17d abgedichtet die Trockenzuluftleitung 6d. Die Zuluft 5 gelangt, angesaugt vom Gebläse 8, über den Einlaßfilter 7 in die Trockenzuluftleitung 6d, die abgedichtet in das Gehäuse 9d des Wärmetauschers 4d ragt. Innerhalb des Gehäuses 9d hat die Zuleitung 6d einen aufwärts gerichteten Leitungsabschnitt 24, der nahe dem oberen Ende des Gehäuses 9d abgewinkelt in einen nach unten gerichteten Leitungsabschnitt übergeht, der das Zuführrohr 14d bildet. In ihm ist die Heizeinrichtung 21 untergebracht. Das Zuführrohr 14d wird innerhalb des Gehäuses 9d abgedichtet durch den Isoliermantel 3d in den Trichter 1d geführt, wie dies beispielsweise anhand von Fig. 2 beschrieben ist.

Die Rückluftleitung 17d, die an das obere Ende des Trichters ld angeschlossen ist, ist innerhalb des Gehäuses 9d rechtwinklig nach unten abgebogen. Dieser Leitungsabschnitt 25 erstreckt sich durch den Leitungsabschnitt 24 der Trockenluftzuleitung 6d, deren Querschnitt größer ist als der Querschnitt des Leitungsabschnittes 25. Darum wird der Leitungsabschnitt 25 über seinen gesamten Umfang von der über die Zuleitung 6 zuströmenden kalten bzw. kühlen Trockenluft umströmt. Der Leitungsabschnitt 25 der Rückluftleitung 17d ist selbstverständlich abgedichtet durch den Leitungsabschnitt 24 der Zuleitung 6d geführt. Der Leitungsabschnitt 25 ragt über den Boden 22d des Gehäuses 9d nach unten. Das überstehende Ende des Leitungsabschnittes 25 weist den Auslaßfilter 20 auf.

Das im Trichter ld gelagerte, zu trocknende Gut wird durch die über die Zuleitung 6 strömende Trockenluft, die mittels der Heizeinrichtung 21 auf die notwendige Trockentemperatur erhitzt worden ist, in gewünschtem Maße getrocknet. Innerhalb des Trichters ld strömt die Trockenluft nach oben und gelangt in die Rückführleitung 17d. Die im Leitungsabschnitt 24 der Zuleitung 6d strömende kühle Trockenluft nimmt von der im Leitungsabschnitt 25 in entgegengesetzter Richtung strömenden, mit Feuchtigkeit beladenen und warmen Rückluft Wärme auf, so daß die Heizeinrichtung 21 entsprechend der Erwärmung der Trockenluft weniger Energie aufbringen muß, um die Trockenluft auf die notwendige Trockentemperatur zu erwärmen. Auch bei dieser Ausführungsform werden die Trokkenluft und die Rückluft vollständig getrennt geführt, so daß eine Vermischung nicht stattfindet. Die Trockenluft wird über die ganze Länge des Leitungsabschnittes 24 am Leitungsabschnitt 25 der Rückluftleitung 17d vorbeigeführt, so daß ein intensiver Wärmeaustausch stattfinden kann.

Auch dieser Trockner kann, ebenso wie der Trockner nach Fig. 2, mit weiteren Trocknern parallelgeschaltet werden, wie dies beispielhaft in den Fig. 3 und 4 dargestellt ist.

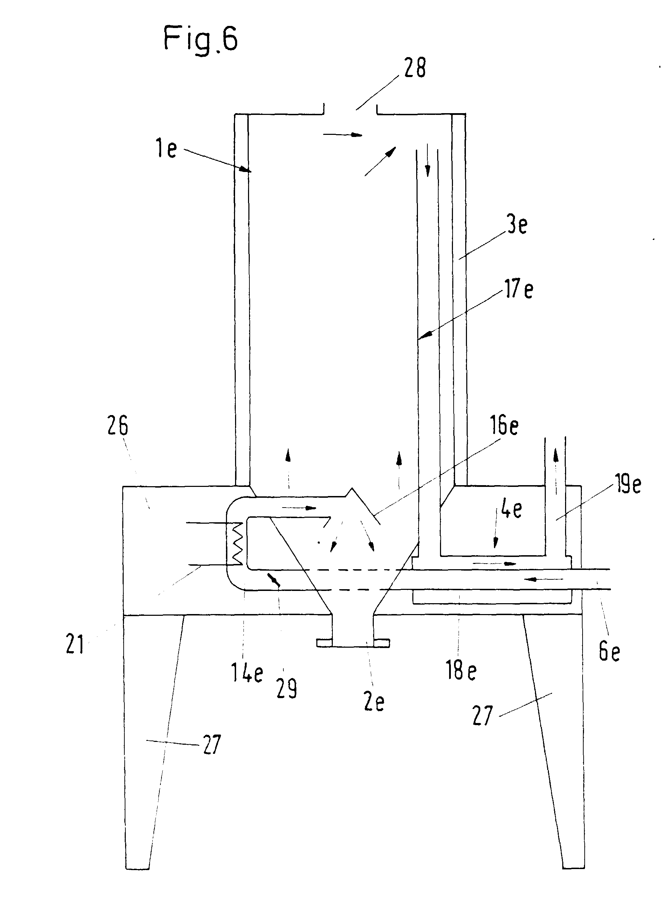

Beim Ausführungsbeispiel nach Fig. 6 sitzt der Trichter le auf einem Tisch 26, der mit Beinen 27 auf dem Untergrund aufsteht. Das konisch verjüngte Ende des Trichters le ragt nach unten aus dem Tisch 26, so daß die Austrittsöffnung 2e, die wie bei den vorigen Ausführungsbeispielen in bekannter Weise mit einem Schieber verschlossen werden kann, im Bereich unterhalb des Tisches 26 liegt. Der zylindrische Bereich des Trichters le erstreckt sich von der Oberseite des Tisches 26 aufwärts und ist von einem Isoliermantel 3e über seine Höhe umgeben. Die Trockenluftzuleitung 6e ist in den Tisch 26 geführt, der als Hohlkörper ausgebildet ist. Die Trockenluftzuleitung 6e verläuft mit geringem Abstand oberhalb des Bodens des Tisches 26 und geht innerhalb des Tisches in das U-förmig ausgebildete Zuführrohr 14e über, das in das konisch verjüngte Ende des Trichters le ragt. Am freien Ende des horizontal verlaufenden Abschnittes des Zuführrohres 14e ist das nach unten gerichtete trichterförmige Ende 16e vorgesehen, aus welchem die Trockenluft nach unten in den Trichter le strömt. Dieses Ende 16e liegt wie bei den vorigen Ausführungsbeispielen in der Achse des Trichters 16e sowie etwa in Höhe des Überganges des zylindrischen Teils in das konisch verjüngte Ende des Trichters le. Im vertikal verlaufenden Teil des Zuführrohres 14e befindet sich die Heizeinrichtung 21, mit der die Trockenluft vor dem Eintritt in den Trichter le auf die erforderliche Temperatur erwärmt werden kann.

Am oberen Ende ist der Trichter le - wie bei den vorigen Ausführungsbeispielen - mit einem Einlaß 28 für das zu trocknende Gut versehen. Nahe der Seitenwand des zylindrischen Teils des Trichters le liegt die Rückluftleitung 17e, deren Eintrittsende nahe dem oberen Ende des Trichters le angeordnet ist und vertikal nach unten verläuft. Sie durchdringt das konisch verjüngte Ende des Trichters le und hat den Leitungsabschnitt 18e, der im Tisch 26 außerhalb des Trichters 1 angeordnet ist und an den rechtwinklig der Leitungsabschnitt 19e anschließt, der nach oben aus dem Tisch 26 geführt ist. Der Leitungsabschnitt 18e umgibt die Trockenluftzuleitung 6e mit Abstand. Der Leitungsabschnitt 18e und die Trockenluftzuleitung 6e bilden den Wärmetauscher 4e.

Zum Trocknen des im Trichter le befindlichen Gutes wird die Trockenluft über die Zuführleitung 6e und das Zuführrohr 14e in den Trichter le geführt. Mit der Heizeinrichtung 21 kann die Trockenluft, falls notwendig, auf eine bestimmte Trocknungstemperatur erwärmt werden. Innerhalb des Trichters le tritt die gegebenenfalls vorerwärmte Trockenluft am trichterförmigen Ende 16e nach unten aus, durchströmt das Gut und nimmt hierbei vom Gut die Feuchtigkeit auf. Die mit Feuchtigkeit beladene Trockenluft strömt dann von oben in die Rückluftleitung 17e, über welche sie abgeführt wird. Innerhalb des Leitungsabschnittes 18e strömt die mit Feuchtigkeit beladene Trockenluft entgegengesetzt zu der in der Leitung 6e zuströmenden Trockenluft. Hierbei wird die Trockenluft in der Trockenluftzuleitung 6e durch die im Leitungsabschnitt 18e strömende erwärmte Luft erwärmt, so daß mit der nachfolgenden Heizeinrichtung 21 die Trockenluft vor dem Eintritt in den Trichter le nur wenig erwärmt werden muß. Die zugeführte Trockenluft wird somit von der Rückluft des Trichters le erwärmt. Die Rohrlängen des Wärmetauschers 4e sind der Heizleistung angepaßt, um einen hohen Wirkungsgrad von bis zu 40 % zu erreichen.

Im Zuführrohr 14e befindet sich in Strömungsrichtung vor der Heizeinrichtung 21 eine Absperrklappe 29, mit der die Durchflußmenge an Trockenluft gesteuert werden kann.

Wird dem Trichter le kein Material entnommen, wird das im Trichter le befindliche Gut stärker erwärmt, als wenn regelmäßig Gut entnommen wird. Dadurch wird die durch das Gut strömende Trockenluft stärker erwärmt, so daß im Wärmetauscher 4e die über die Trockenluftzuleitung 6e zuströmende Trockenluft entsprechend stark erwärmt wird. In der Trockenluftzuleitung befindet sich in Strömungsrichtung vor der Heizeinrichtung 21 vorteilhaft ein Temperatursensor, der die jeweilige Temperatur der zuströmenden Trockenluft mißt und dementsprechend die Leistung der Heizeinrichtung 21 regelt. Ist die zugeführte Trokkenluft entsprechend stark erwärmt, wird somit über den Temperatursensor die Leistung der Heizeinrichtung 21 gedrosselt und somit Energie eingespart.

Die aus dem Leitungsabschnitt 19e strömende Rückluft kann entweder ins Freie geführt oder der Trockenluftzuleitung 6e zugeführt werden, so daß die Rückluft erneut als Trdckenluft eingesetzt wird. In einem solchen Kreislauf kann wenigstens eine Trocknungspatrone liegen, durch welche bei Bedarf die Rückluft zum Feuchtigkeitsentzug geführt werden kann, bevor sie wieder als Zuluft der Trockenluftzuleitung 6e zugeführt wird.

Der Wärmetauscher 4e ist innerhalb des Tisches 26 untergebracht und somit von außen nicht sichtbar. Anstelle des Tisches 26 mit den Beinen 27 kann selbstverständlich auch ein Gehäuse oder dergleichen eingesetzt werden, in dem der Wärmetauscher mit seinen entsprechenden Leitungen geschützt untergebracht werden kann.

Als Zuluft kann Außenluft, entfeuchtete Luft, Gase oder jede andere geeignete Vorluft verwendet werden. Anstelle der beschriebenen Druckgebläse kann selbstverständlich auch ein Sauggebläse eingesetzt werden, das vorteilhaft an die Rückluftleitung angeschlossen ist. Bei sämtlichen Ausführungsformen kann der Wärmetauscher auch vom Trichter getrennt vorgesehen sein.

## Patentansprüche

1. Trockner mit mindestens einem Vorratsbehälter (1, 1b) für zu trocknendes Gut, mit wenigstens einer Zuleitung (6) für trockene Zuluft (5), die durch eine Heizeinrichtung (21) auf Trocknungstemperatur erwärmbar ist und die nach dem Durchgang durch das zu trocknende Gut in mindestens eine an den oberen Bereich des Vorratsbehälters (1, 1b) angeschlossene Rückluftleitung (17, 17b) strömt, wobei die Zuluft (5) vor dem Eintritt in den Vorratsbehälter (1, 1b) durch einen Gehäuseraum (9, 9b) eines Wärmetauschers (4, 4b) strömt, der als Bestandteil einen Teil der Rückluftleitung (17, 17b) aufweist,
dadurch gekennzeichnet, daß die Rückluftleitung (17, 17b) innerhalb des Gehäuseraumes (9, 9b) zwei parallel zueinander liegende Leitungsabschnitte (18, 19; 18b, 19b) aufweist, die miteinander verbunden sind und in denen die Rückluft in einander entgegengesetzten Richtungen strömt, daß die Zuleitung (6) innerhalb des Gehäuseraumes zwei parallel zueinander liegende Strömungsabschnitte (11, 12) aufweist, die miteinander verbunden sind und in denen die Zuluft (5) in einander entgegengesetzten Richtungen strömt, und daß an den Gehäuseraum (9, 9b) nach unten eine Zuführleitung (14, 14b) anschließt, die in den Vorratsbehälter ragt und deren Austrittsöffnung (16, 16b) im Vorratsbehälter (1, 1b) nach unten ragt, so daß die Zuluft (5) nach unten in das zu trocknende Gut strömt (Fig. 1 und 3).

2. Trockner nach Anspruch 1,
dadurch gekennzeichnet, daß die Strömungsabschnitte (11, 12) der Zuleitung (6) durch eine Zwischenwand (10) des Gehäuseraumes (9, 9b) teilweise voneinander getrennt sind (Fig. 1 und 3).

3. Trockner nach Anspruch 1 oder 2,
dadurch gekennzeichnet, daß in den Strömungsabschnitten (11, 12) der Zuleitung (6) jeweils ein Leitungsabschnitt (18, 19; 18b, 19b) der Rückluftleitung (17, 17b) liegt, in denen die Rückluft jeweils in entgegengesetzten oder in gleichen Richtungen wie die Zuluft (5) strömt (Fig. 1 und 3).

4. Trockner mit mindestens einem Vorratsbehälter (1a) für zu trocknendes Gut, mit wenigstens einer Zuleitung (6) für trockene Zuluft (5), die durch eine Heizeinrichtung (21) auf Trocknungstemperatur erwärmbar ist und die nach dem Durchgang durch das zu trocknende Gut in mindestens eine an den oberen Bereich des Vorratsbehälters (1a) angeschlossene Rückluftleitung (17a) strömt, wobei die Zuluft (5) vor dem Eintritt in den Vorratsbehälter (1a) durch einen Gehäuseraum (9a) wenigstens eines Wärmetauschers (4a) strömt, der als Bestandteil einen Teil der Rückluftleitung (17a) aufweist,
dadurch gekennzeichnet, daß die Rückluftleitung (17a) innerhalb des Gehäuseraumes (9a) zwei parallel zueinander liegende Leitungsabschnitte (18a, 19a) aufweist, die miteinander verbunden sind und in denen die Rückluft in einander entgegengesetzten Richtungen strömt, daß die Zuluft (5) im Gehäuseraum (9a) an den Leitungsabschnitten (18a, 19a) wobei geführt ist und danach in eine Zuführleitung (14a) strömt, die U-förmig ausgebildet ist und im unteren Bereich in den Vorratsbehälter (1a) ragt, und daß das Austrittsende (16a) der Zuführleitung (14a) im Vorratsbehälter (1a) nach unten ragt, so daß die Zuluft (5) nach unten in das zu trocknende Gut strömt (Fig. 2).

5. Trockner nach Anspruch 4,
dadurch gekennzeichnet, daß die Zuleitung (14a) im Bereich unterhalb der Rückluftleitung (17a) liegt (Fig. 2).

6. Trockner nach Anspruch 4 oder 5,
dadurch gekennzeichnet, daß ein Gebläse (8) für die Förderung der Zuluft (5) im Gehäuseraum (9a) untergebracht ist (Fig. 2).

7. Trockner mit mindestens einem Vorratsbehälter (1c, 1d) für zu trocknendes Gut, mit wenigstens einer Zuleitung (6) für trockene Zuluft (5), die durch eine Heizeinrichtung (21) auf Trockungstemperatur erwärmbar ist und die nach dem Durchgang durch das zu trocknende Gut in mindestens eine an den oberen Bereich des Vorratsbehälters (1c, 1d) angeschlossene Rückluftleitung (17c, 17d) strömt, wobei die Zuluft (5) vor dem Eintritt in den Vorratsbehälter (1c, 1d) durch einen Gehäuseraum (9c, 9d) wenigstens eines Wärmetauschers (4c, 4d) strömt, der als Bestandteil einen Teil der Rückluftleitung (17c, 17d) aufweist, dadurch gekennzeichnet, daß die Zuluft (5) und die Rückluft innerhalb des Gehäuseraumes (9c, 9d) des Wärmetauschers (4c, 4d) Strömungsbereiche 11c, 18c; 12c, 19c) aufweisen, in denen die Zuluft (5) und die Rückluft in einander entgegengesetzten Richtungen strömen, daß die Zuluft (5) vor dem Eintritt in den Vorratsbehälter (1c, 1d) in eine Zuführleitung (14c, 14d) gelangt, in der sie vom Wärmetauscher (4c, 4d) in den Vorratsbehälter (1c, 1d) strömt, daß die Zuführleitung (14c, 14d) im unteren Bereich in den Vorratsbehälter (1c, 1d) ragt, und daß das Austrittsende (16c) der Zuführleitung (14c, 14d) im Vorratsbehälter (1c, 1d) nach unten gerichtet ist, so daß die Zuluft (5) nach unten in das zu trocknende Gut strömt (Fig. 4 und 5).

8. Trockner nach Anspruch 7,
dadurch gekennzeichnet, daß der Gehäuseraum (9c) des Wärmetauschers (4c) durch eine Zwischenwand (10c) in zwei Strömungsabschnitte (11c, 12c) für die Zuluft (5) unterteilt ist, die miteinander verbunden sind und in denen die Zuluft (5) in einander entgegengesetzten Richtungen strömt (Fig. 4).

9. Trockner nach Anspruch 8,
dadurch gekennzeichnet, daß in den einen Strömungsabschnitt (12c) die Zuführleitung (14c) mündet (Fig. 4).

10. Trockner nach Anspruch 8 oder 9,
dadurch gekennzeichnet, daß die Rückluftleitung (17c) zwei parallel zueinander liegende Leitungsabschnitte (18c, 19c) aufweist, die jeweils in einem Strömungsabschnitt (11c, 12c) liegen (Fig. 4).

11. Trockner nach Anspruch 7,
dadurch gekennzeichnet, daß die Rückluftleitung (17d) im Gehäuseraum (9d) einen Leitungsabschnitt (25) aufweist, der von einem Strömungsabschnitt (24) der Zuführleitung (14d) mit Abstand umgeben ist (Fig. 5).

12. Trockner nach Anspruch 11,
dadurch gekennzeichnet, daß der Leitungsabschnitt (25) der Rückluftleitung (17d) abgedichtet nach unten aus dem Gehäuseraum (9d) herausgeführt ist (Fig. 5).

13. Trockner mit mindestens einem Vorratsbehälter (le) für zu trocknendes Gut, mit wenigstens einer Zuleitung (6e) für trockene Zuluft (5), die durch eine Heizeinrichtung (21) auf Trocknungstemperatur erwärmbar ist und die nach dem Durchgang durch das zu trocknende Gut in mindestens eine an den oberen Bereich des Vorratsbehälters (1e) angeschlossene Rückluftleitung (17e) strömt, wobei die Zuluft (5) vor dem Eintritt in den Vorratsbehälter (1e) durch einen Gehäuseraum (26) wenigstens eines Wärmetauschers (4e) strömt, der als Bestandteil einen Teil der Rückluftleitung (17e) aufweist,
dadurch gekennzeichnet, daß die Rückluftleitung (17e) innerhalb des Gehäuseraumes (26) zwei parallel zueinander liegende Leitungsabschnitte aufweist, die miteinander verbunden sind und in denen die Rückluft in einander entgegengesetzten Richtungen strömt, daß die Zuluft (5) im Gehäuseraum (26) in eine Zuführleitung (14e) strömt, die innerhalb des Gehäuseraumes (26) U-förmig ausgebildet ist und im unteren Bereich in den Vorratsbehälter (1e) ragt, und daß das Austrittsende (16e) der Zuführleitung (14e) im Vorratsbehälter (1e) nach unten gerichtet ist, so daß die Zuluft (5) nach unten in das zu trocknende Gut strömt (Fig. 6).

14. Trockner nach Anspruch 13,
dadurch gekennzeichnet, daß ein Strömungsabschnitt der Zuluftleitung (14e) von einem Leitungsabschnitt (18e) der Rückluftleitung (17e) mit Abstand umgeben ist (Fig. 6).

15. Trockner nach Anspruch 13 oder 14,
dadurch gekennzeichnet, daß der Vorratsbehälter (1e) vom Gehäuseraum (26) vertikal absteht (Fig. 6).

16. Trockner nach einem der Ansprüche 13 bis 15,
dadurch gekennzeichnet, daß die Rückluftleitung (17e) ein Eintrittsende nahe dem oberen Bereich des Vorratsbehälters (1e) aufweist und in einem Leitungsabschnitt nahe dem unteren Ende des Vorratsbehälters abgedichtet aus dem Vorratsbehälter (1e) herausgeführt ist (Fig. 6).

17. Trockner nach einem der Ansprüche 1 bis 16,
dadurch gekennzeichnet, daß mindestens zwei Vorratsbehälter (1b, 1c) mit Wärmetauscher (4b, 4c) parallelgeschaltet sind (Fig. 3 und 4).

## Claims

1. A drier having at least one storage vessel (1, 1b) for material to be dried, having at least one feed pipe (6) for dry inlet air (5) which may be heated to drying temperature by means of a heating device (21) and, after passing through the material to be dried, flows into at least one return air pipe (17, 17b) connected to the upper region of the storage vessel (1, 1b), wherein the inlet air (5), before entering the storage vessel (1, 1b), flows through a housing chamber (9, 9b) of a heat exchanger (4, 4b) having part of the return air pipe (17, 17b) as a component part thereof, characterised in that the return air pipe (17, 17b) has two pipe sections (18, 19; 18b, 19b) inside the housing chamber (9, 9b) which lie mutually parallel, are interconnected and in which the return air flows in mutually opposite directions, in that the feed pipe (6) has two flow sections (11, 12) inside the housing chamber which lie mutually parallel, are interconnected and in which the inlet air (5) flows in mutually opposite directions, and in that a supply pipe (14, 14b) is joined downwardly to the housing chamber (9, 9b), which supply pipe projects into the storage vessel and the discharge opening (16, 16b) of which projects downwardly in the storage vessel (1, 1b) so that the inlet air (5) flows downwardly into the material to be dried (Fig. 1 and 3).

2. A drier according to claim 1, characterised in that the flow sections (11, 12) of the feed pipe (6) are partially separated from one another by means of a partition wall (10) of the housing chamber (9, 9b) (Fig. 1 and 3).

3. A drier according to claim 1 or 2, characterised in that respective pipe sections (18, 19; 18b, 19b) of the return air pipe (17, 17b) are located in the flow sections (11, 12) of the feed pipe (6), in which pipe sections the return air flows in opposite directions or in the same directions to the inlet air (5) (Fig. 1 and 3).

4. A drier having at least one storage vessel (1a) for material to be dried, having at least one feed pipe (6) for dry inlet air (5) which may be heated to drying temperature by means of a heating device (21) and, after passing through the material to be dried, flows into at least one return air pipe (17a) connected to the upper region of the storage vessel (1a), wherein the inlet air (5), before entering the storage vessel (1a), flows through a housing chamber (9a) of at least one heat exchanger (4a) having part of the return air pipe (17a) as a component part thereof, characterised in that the return air pipe (17a) has two pipe sections (18a, 19a) inside the housing chamber (9a) which lie mutually parallel, are interconnected and in which the return air flows in mutually opposite directions, in that the inlet air (5) is directed in the housing chamber (9a) past the pipe sections (18a, 19a) and then flows into a supply pipe (14a) which is U-shaped and projects in the lower region into the storage vessel (1a), and in that the discharge end (16a) of the supply pipe (14a) projects downwardly in the storage vessel (1a) so that the inlet air (5) flows downwardly into the material to be dried (Fig. 2).

5. A drier according to claim 4, characterised in that the supply pipe (14a) is located in the region beneath the return air pipe (17a) (Fig. 2).

6. A drier according to claim 4 or 5, characterised in that a fan (8) for delivering the inlet air (5) is housed in the housing chamber (9a) (Fig. 2).

7. A drier having at least one storage vessel (1c, 1d) for material to be dried, having at least one feed pipe (6) for dry inlet air (5) which may be heated to drying temperature by means of a heating device (21) and, after passing through the material to be dried, flows into at least one return air pipe (17c, 17d) connected to the upper region of the storage vessel (1c, 1d), wherein the inlet air (5), before entering the storage vessel (1c, 1d), flows through a housing chamber (9c, 9d) of at least one heat exchanger (4c, 4d) having part of the return air pipe (17c, 17d) as a component part thereof, characterised in that the inlet air (5) and the return air have flow regions (11c, 18c; 12c, 19c) inside the housing chamber (9c, 9d) of the heat exchanger (4c, 4d), in which flow regions the inlet air (5) and the return air flow in mutually opposite directions, in that the inlet air (5), before it enters the storage vessel (1c, 1d), passes into a supply pipe (14c, 14d) in which it flows from the heat exchanger (4c, 4d) into the storage vessel (1c, 1d), in that the supply pipe (14c, 14d) projects in the lower region into the storage vessel (1c, 1d), and in that the discharge end (16c) of the supply pipe (14c, 14d) is directed downwardly in the storage vessel (1c, 1d) so that the inlet air (5) flows downwardly into the material to be dried (Fig. 4 and 5).

8. A drier according to claim 7, characterised in that the housing chamber (9c) of the heat exchanger (4c) is divided by means of a partition wall (10c) into two flow sections (11c, 12c) for the inlet air (5) which are interconnected and in which the inlet air (5) flows in mutually opposite directions (Fig. 4).

9. A drier according to claim 8, characterised in that the supply pipe (14c) opens in one (12c) of the flow sections.

10. A drier according to claim 8 or 9, characterised in that the return air pipe (17c) has two pipe sections (18c, 19c) which lie mutually parallel and lie in respective flow sections (11c, 12c) (Fig. 4).

11. A drier according to claim 7, characterised in that the return air pipe (17d) has a pipe section (25) in the housing chamber (9d) which is enclosed by a flow section (24) of the supply pipe (14d) with spacing therebetween (Fig. 5).

12. A drier according to claim 11, characterised in that the pipe section (25) of the return air pipe (17d) is directed downwardly, sealed, out of the housing chamber (9d) (Fig. 5).

13. A drier having at least one storage vessel (1e) for material to be dried, having at least one feed pipe (6e) for dry inlet air (5) which may be heated to drying temperature by means of a heating device (21) and, after passing through the material to be dried, flows into at least one return air pipe (17e) connected to the upper region of the storage vessel (le), wherein the inlet air (5), before entering the storage vessel (1e), flows through a housing chamber (26) of at least one heat exchanger (4e) having part of the return air pipe (17e) as a component part thereof, characterised in that the return air pipe (17e) has two pipe sections inside the housing chamber (26) which lie mutually parallel, are interconnected and in which the return air flows in mutually opposite directions, in that the inlet air (5) in the housing chamber (26) flows into a supply pipe (14e) which is designed in a U-shape within the housing chamber (26) and projects in the lower region into the storage vessel (le), and in that the discharge end (16e) of the supply pipe (14e) is directed downwardly in the storage vessel (1e) so that the inlet air (5) flows downwardly into the material to be dried (Fig. 6).

14. A drier according to claim 13, characterised in that a flow section of the inlet air pipe (14e) is enclosed by a pipe section (18e) of the return air pipe (17e) with spacing therebetween (Fig. 6).

15. A drier according to claim 13 or 14, characterised in that the storage vessel (1e) projects vertically from the housing chamber (26) (Fig. 6).

16. A drier according to one of claims 13 to 15, characterised in that the return air pipe (17e) has an inlet end close to the upper region of the storage vessel (1e) and is directed, sealed, in a pipe section close to the lower end of the storage vessel out of the storage vessel (1e) (Fig. 6).

17. A drier according to one of claims 1 to 16, characterised in that at least two storage vessels (1b, 1c) with heat exchangers (4b, 4c) are connected in parallel (Fig. 3 and 4).

## Revendications

1. Séchoir comprenant au moins un récipient de réserve (1, 1b) pour un produit à sécher, comprenant au moins une conduite d'amenée (6) pour de l'air admis sec (5), lequel peut être réchauffé au moyen d'un dispositif de chauffage (21) jusqu'à une température de séchage et s'écoule après la traversée du produit à sécher dans au moins une conduite de retour (17, 17b) raccordée à la région supérieure du récipient de réserve (1, 1b), l'air admis (5) s'écoulant avant l'entrée dans le récipient de réserve (1, 1b) à travers une chambre de boîtier (9, 9b) dans l'échangeur de chaleur (4, 4b), ce dernier comprenant à titre de composant une partie de la conduite de retour d'air (17, 17b),
caractérisé en ce que la conduite de retour d'air (17, 17b) comprend à l'intérieur de la chambre de boîtier (9, 9b) deux tronçons de conduite (18, 19 ; 18b, 19b), qui s'étendent parallèlement l'un à l'autre, sont reliés l'un à l'autre, et dans lesquels l'air de retour s'écoule dans des directions mutuellement opposées, en ce que la conduite d'amenée (6) comporte à l'intérieur de la chambre de boîtier deux tronçons d'écoulement parallèles l'un à l'autre (11, 12), qui sont reliés l'un à l'autre et dans lesquels l'air admis (5) s'écoule dans des directions mutuellement opposées, et en ce qu'à la chambre de boîtier (9, 9d) se raccorde vers le bas une conduite d'amenée (14, 14b) qui dépasse dans le récipient de réserve, et dont l'ouverture de sortie (16, 16b) dépasse vers le bas dans le récipient de réserve (1, 1b), de sorte que l'air admis (5) s'écoule vers le bas jusque dans le produit à sécher (figures 1 et 3).

2. Séchoir selon la revendication 1,
caractérisé en ce que les tronçons d'écoulement (11, 12) de la conduite d'amenée (6) sont partiellement séparés l'un de l'autre par une cloison (10) de la chambre de boîtier (9, 9b) (figures 1 et 3).

3. Séchoir selon l'une ou l'autre des revendications 1 et 2,
caractérisé en ce qu'un tronçon de conduite respectif (18, 19 ; 18b, 19b) de la conduite de retour d'air (17, 17b) est disposé dans les tronçons d'écoulement (11, 12) de la conduite d'amenée (6), et en ce que dans ces tronçons de conduites l'air de retour s'écoule respectivement en direction opposée ou dans la même direction que l'air admis (5)(figures 1 et 3).

4. Séchoir comprenant au moins un récipient de réserve (1a) pour un produit à sécher, comprenant au moins une conduite d'amenée (6) pour de l'air admis sec (5), lequel peut être réchauffé par un dispositif de chauffage (21) jusqu'à une température de séchage, et s'écoule, après traversée du produit à sécher, dans au moins une conduite de retour d'air (17a) raccordée à la région supérieure du récipient de réserve (1a), l'air admis (5) s'écoulant avant l'entrée dans le récipient de réserve (1a) à travers une chambre de boîtier (9a) d'au moins un échangeur de chaleur (4a) qui comprend comme composant une partie de la conduite d'air de retour (17a),
caractérisé en ce que la conduite d'air de retour (17a) comprend à l'intérieur de la chambre de boîtier (9a) deux tronçons de conduites (18a, 19a), qui sont disposés parallèlement l'un l'autre, qui sont reliés l'un à l'autre, et dans lesquels l'air de retour s'écoule dans des directions opposées, en ce que l'air admis (5) dans la chambre de boîtier (9a) est mené le long des tronçons de conduites (18a, 19a) et s'écoule ensuite dans une conduite d'amenée (14a), laquelle est réalisée en forme de U et dépasse dans la région inférieure jusque dans le récipient de réserve (1a), et en ce que l'extrémité de sortie (16a) de la conduite d'amenée (14a) dépasse vers le bas dans le récipient de réserve (1a), de sorte que l'air admis (5) s'écoule vers le bas jusque dans le produit à sécher (figure 2).

5. Séchoir selon la revendication 4,
caractérisé en ce que la conduite d'amenée (14a) est située dans la région au-dessous de la conduite de retour d'air (17a) (figure 2).

6. Séchoir selon l'une ou l'autre des revendications 4 et 5,
caractérisé en ce qu'un ventilateur (8) pour le transport de l'air admis (5) est logé dans la chambre de boîtier (9a) (figure 2).

7. Séchoir comprenant au moins un récipient de réserve (1c, 1d) pour un produit à sécher, comprenant au moins une conduite d'amenée (6) pour de l'air admis sec (5), lequel peut être réchauffé par un dispositif de chauffage (21) jusqu'à une température de séchage, et s'écoule, après traversée du produit à sécher, dans au moins une conduite de retour d'air (17c, 17d) raccordée à la région supérieure du récipient de réserve (1c, 1d), l'air admis (5) s'écoulant avant l'entrée dans le récipient de réserve (1c, 1d) à travers une chambre de boîtier (9c, 9d) d'au moins un échangeur de chaleur (4c, 4d) qui comprend comme composant une partie de la conduite d'air de retour (17c, 17d),
caractérisé en ce que l'air admis (5) et l'air de retour comportent à l'intérieur de la chambre de boîtier (9c, 9d) de l'échangeur de chaleur (4c, 4d) des zones d'écoulement (11c, 18c ; 12c, 19c) dans lesquelles l'air admis (5) et l'air de retour s'écoulent dans des directions mutuellement opposées, en ce que l'air admis (5) parvient, avant d'entrer dans le récipient de réserve (7c, 7d), dans une conduite d'amenée (14c, 14d) dans laquelle il s'écoule depuis l'échangeur de chaleur (4c, 4d) jusque dans le récipient de réserve (1c, 1d), en ce que la conduite d'amenée (14c, 14d) dépasse dans la région inférieure jusque dans le récipient de réserve (1c, 1d), et en ce que l'extrémité de sortie (16c) de la conduite d'amenée (14c, 14d) dans le récipient de réserve (1c, 1d) est dirigée vers le bas, de sorte que l'air admis (5) s'écoule vers le bas jusque dans le produit à sécher (figures 4 et 5).

8. Séchoir selon la revendication 7,
caractérisé en ce que la chambre de boîtier (9c) de l'échangeur de chaleur (4c) est subdivisée par une cloison (10c) en deux tronçons d'écoulement (11c, 12c) pour l'air admis (5), qui sont reliés l'un à l'autre, et dans lesquels l'air admis (5) s'écoule dans des directions mutuellement opposées (figure 4).

9. Séchoir selon la revendication 8,
caractérisé en ce que la conduite d'amenée (14c) débouche dans l'un des tronçons d'écoulement (12c) (figure 4).

10. Séchoir selon l'une ou l'autre des revendications 8 et 9,
caractérisé en ce que la conduite de retour d'air (17c) comporte deux tronçons de conduites (18c, 19c) disposés parallèlement l'un à l'autre, qui sont respectivement situés dans un tronçon d'écoulement (11c, 12c) (figure 4).

11. Séchoir selon la revendication 7,
caractérisé en ce que la conduite de retour d'air (17d) comporte dans la chambre de boîtier (9b) un tronçon de conduite (25) qui est entouré à distance par un tronçon d'écoulement (24) de la conduite d'amenée (14d) (figure 5).

12. Séchoir selon la revendication 11,
caractérisé en ce que le tronçon de conduite (25) de la conduite de retour d'air (17d) est mené hors de la chambre de boîtier (9d) de manière étanche et vers le bas (figure 5).

13. Séchoir comprenant au moins un récipient de réserve (le) pour un produit à sécher, comprenant au moins une conduite d'amenée (6) pour de l'air admis sec (5), lequel peut être réchauffé par un dispositif de chauffage (21) jusqu'à une température de séchage, et s'écoule, après traversée du produit à sécher, dans au moins une conduite de retour d'air (17e) raccordée à la région supérieure du récipient de réserve (1e), l'air admis (5) s'écoulant avant l'entrée dans le récipient de réserve (le) à travers une chambre de boîtier (9e) d'au moins un échangeur de chaleur (4e) qui comprend comme composant une partie de la conduite d'air de retour (17e).
caractérisé en ce que la conduite de retour d'air (17e) comprend à l'intérieur de la chambre de boîtier (26) deux tronçons de conduites disposés parallèlement l'un à l'autre, qui sont reliés l'un à l'autre et dans lesquelles l'air de retour s'écoule dans des directions mutuellement opposées, en ce que l'air admis (5) dans la chambre de boîtier (26) s'écoule dans une conduite d'amenée (14e), laquelle est réalisée en forme de U à l'intérieur de la chambre de boîtier (26) et dépasse dans la région inférieure jusque dans le récipient de réserve (le), et en ce que l'extrémité de sortie (16e) de la conduite d'amenée (14e) dans le récipient de réserve (1e) est dirigée vers le bas, de sorte que l'air admis (5) s'écoule vers le bas jusque dans le produit à sécher (figure 6).

14. Séchoir selon la revendication 13,
caractérisé en ce qu'un tronçon d'écoulement de la conduite d'amenée (14e) est entouré à distance par un tronçon de conduite (18e) de la conduite de retour d'air (17e) (figure 6).

15. Séchoir selon l'une ou l'autre des revendications 13 et 14,
caractérisé en ce que le récipient de réserve (1e) dépasse verticalement depuis la chambre de boîtier (26) (figure 6).

16. Séchoir selon l'une des revendications 13 à 15,
caractérisé en ce que la conduite de retour d'air (17e) comporte une extrémité d'entrée à proximité de la région supérieure du récipient de réserve (le), et en ce qu'elle est menée vers l'extérieur hors du récipient de réserve (1e) de manière étanche à proximité de l'extrémité inférieure du récipient de réserve (figure 6).

17. Séchoir selon l'une des revendications 1 à 16,
caractérisé en ce qu'au moins deux récipients de réserve (1b, 1c) avec des échangeurs de chaleur (4b, 4c) sont branchés en parallèle (figures 3 et 4).
